# EUROPÄISCHE PATENTANMELDUNG

(11) **EP 4 563 409 A1**
(43) Veröffentlichungstag der Anmeldung: **04.06.2025**
(21) Anmeldenummer: 24197315.5
(22) Anmeldetag: 29.08.2024
(51) Int. Cl.: B60P 1/64

(54) **ABROLLKIPPER SOWIE VERFAHREN ZUM ERMITTELN DES SCHWERPUNKTS UND/ODER DER LÄNGE EINER VON EINEM ABROLLKIPPER AUFZUNEHMENDEN LAST**

(30) Priorität: 28.11.2023 DE 102023004896
(71) Anmelder: Franz Xaver Meiller Fahrzeug- und Maschinenfabrik - GmbH & Co KG, 80997 München (DE)
(72) Erfinder: BANDILLA, Peter, 82216 Maisach (DE)
(74) Vertreter: Weickmann & Weickmann PartmbB

(57) **Zusammenfassung**

Die vorliegende Erfindung betrifft einen Abrollkipper (10), umfassend einen Fahrzeugkörper (16), einen schwenkbaren Hakenausleger (22), welcher dazu eingerichtet ist, eine Last (12) auf den Abrollkipper (10) aufzuziehen und sie von dem Abrollkipper (10) abzusetzen, einen dem Hakenausleger (22) zugeordneten Antrieb (24), welcher dazu eingerichtet ist, die Schwenkbewegung des Hakenauslegers (22) anzutreiben, wenigstens eine am Heck des Fahrzeugkörpers (16) angeordnete Führungsrolle (28), welche dazu eingerichtet ist, die auf den Abrollkipper (10) aufzuziehende oder davon abzusetzende Last (12) während eines entsprechenden Aufsetz- oder Absetzvorgangs zu führen, eine dem Hakenausleger (22) oder dem Antrieb (24) zugeordnete Kraft-Messeinrichtung (30), welche dazu eingerichtet ist, wenigstens während Aufsetzvorgängen eine an dem Hakenauslieger (22) bzw. dem Antrieb (24) anliegende Kraft zu bestimmen, eine dem Hakenausleger (22) oder dem Antrieb (24) zugeordnete Position-Bestimmungseinheit (32), welche dazu eingerichtet ist, eine momentane Position des Hakenauslegers (22) oder eine momentane Betriebsposition des Antriebs (24) zu bestimmen; und eine Steuereinheit (34), welche mit der Kraft-Messeinrichtung (30) und der Position-Bestimmungseinheit (32) betriebsmäßig gekoppelt und dazu eingerichtet ist, anhand der von der Kraft-Messeinrichtung (30) und der Position-Bestimmungseinheit (32) gelieferten Daten den Schwerpunkt (S12) und/oder die Länge (L12) einer von dem Abrollkipper (10) aufzunehmenden Last (12) zu bestimmen.

## Beschreibung

Die vorliegende Erfindung betrifft einen Abrollkipper sowie ein Verfahren zum Ermitteln des Schwerpunkts und/oder der Länge einer von einem solchen Abrollkipper aufzunehmenden Last.

Abrollkipper sind an sich aus dem Stand der Technik bekannt und arbeiten derart, dass sie zum Aufnehmen einer Last und insbesondere eines Abrollcontainers diesen mittels eines schwenkbaren Hakenauslegers greifen und dann über am Heck des Fahrzeugs angeordnete Führungsrollen auf einen Ladebereich aufziehen, wo der entsprechende Container gesichert und anschließend transportiert werden kann. Zum Absetzen entsprechender Lasten wird dem hingegen ein umgekehrter Bewegungsablauf vorgesehen, d.h. ein Abrollen des Containers über die genannte Führungsrolle, bis dieser auf dem Untergrund aufsitzt und mittels des Hakenauslegers von dem Fahrzeug weggeschoben werden kann, bis seine gewünschte Zielposition erreicht ist. Ferner ist es in der Regel in derartigen Abrollkippern möglich, die Position eines aufgenommenen Containers in Längsrichtung des Fahrzeugs in einem gewissen Rahmen anzupassen, indem der Hakenausleger hinsichtlich seiner Längsposition oder Erstreckung in einem solchen Zustand einstellbar ist. Auf diese Weise kann eine Sicherung der aufgenommenen Last in einer vorgesehenen Position durchgeführt werden.

Es kann aus verschiedenen Gründen hierbei vorteilhaft sein, Parameter der aufzunehmenden Last zu kennen, beispielsweise ihre Länge sowie ihre Schwerpunktslage. In diesem Zusammenhang soll festgehalten sein, dass von Abrollkippern eines gegebenen Typs üblicherweise unterschiedlich lange Container transportiert werden können, indem diese mit Hilfe des bereits angesprochenen linearen Verlagerungsmechanismus des Hakenauslegers hinsichtlich ihrer Transportposition auf dem Abrollkipper eingestellt und in einer geeigneten Position fixiert werden können. Um hierbei mögliche Bedienungsfehler ausschließen zu können, kann es erwünscht sein, einen derartigen Prozess automatisiert ablaufen zu lassen, d.h. den Schwerpunkt und/oder die Länge einer entsprechenden von einem Abrollkipper aufzunehmenden Last automatisiert zu bestimmen, ohne dass hierzu eine Eingabe durch einen Bediener des Fahrzeugs oder ähnliches notwendig wäre.

Dementsprechend ist es die Aufgabe der vorliegenden Erfindung, einen hierzu geeigneten Abrollkipper sowie ein Verfahren zum Ermitteln des Schwerpunkts und/oder der Länge einer von einem solchen Abrollkipper aufzunehmenden Last bereitzustellen, mittels welcher in vorteilhafter Weise die genannten Parameter der Last automatisiert bestimmt werden können.

Zu diesem Zweck umfasst der erfindungsgemäße Abrollkipper einen Fahrzeugkörper, einen schwenkbaren Hakenausleger, welcher dazu eingerichtet ist, eine Last auf den Abrollkipper aufzuziehen und sie von dem Abrollkipper abzusetzen, einen dem Hakenausleger zugeordneten Antrieb, welcher dazu eingerichtet ist, die Schwenkbewegung des Hakenauslegers anzutreiben, wenigstens eine am Heck des Fahrzeugkörpers angeordnete Führungsrolle, welche dazu eingerichtet ist, die auf den Abrollkipper aufzuziehende oder davon abzusetzende Last während eines entsprechenden Aufsetz- oder Absetzvorgangs zu führen, eine dem Hakenausleger oder dem Antrieb zugeordnete Kraft-Messeinrichtung, welche dazu eingerichtet ist, wenigstens während Aufsetzvorgängen eine an dem Hakenausleger bzw. dem Antrieb anliegende Kraft zu bestimmen, eine dem Hakenausleger oder dem Antrieb zugeordnete Position-Bestimmungseinheit, welche dazu eingerichtet ist, eine momentane Position des Hakenauslegers oder eine momentane Betriebsposition des Antriebs zu bestimmen, und eine Steuereinheit, welche mit der Kraft-Messeinrichtung und der Position-Bestimmungseinheit betriebsmäßig gekoppelt und dazu eingerichtet ist, anhand der von der Kraft-Messeinrichtung und der Position-Bestimmungseinheit gelieferten Daten den Schwerpunkt und/oder die Länge einer von dem Abrollkipper aufzunehmenden Last zu bestimmen.

Dementsprechend wird sich erfindungsgemäß zunutze gemacht, dass die Aufnahme einer Kraft-Kennlinie abhängig von einer ebenfalls bestimmten Position des Hakenauslegers bzw. der momentanen Betriebsposition des Antriebs typische Verhaltensweisen und Muster zeigt, aus welchen sich der Schwerpunkt und/oder die Länge einer derart aufgenommenen Last mit hoher Präzision und Zuverlässigkeit ableiten lassen.

Insbesondere kann die Steuereinheit in diesem Zusammenhang dazu eingerichtet sein, den Schwerpunkt und/oder die Länge der Last anhand eines erfassten Lastwechsels an dem Hakenausleger oder dem Antrieb und/oder einem momentanen starken, insbesondere sprunghaften, Anstieg der erfassten Kraft abhängig von der momentanen Position des Hakenauslegers bzw. der momentanen Betriebsposition zu ermitteln.

Dieses Vorgehen beruht auf der Erkenntnis, dass feststellt worden ist, dass in dem Moment, in welchem der Schwerpunkt der Last eine Ebene durchläuft, welche sich von der wenigstens einen Führungsrolle vertikal nach oben erstreckt, an dem Hakenausleger bzw. seinem Antrieb ein Wechsel von einer Zugbelastung auf eine Druckbelastung stattfindet. Dementsprechend kann über die bekannten geometrischen Parameter des Hakenauslegers bei einem derart erfassten Lastwechsel die momentane Position des Schwerpunkts der Last und ggf. auch deren Länge bestimmt werden.

In ähnlicher Weise hat sich gezeigt, dass momentane starke, und insbesondere sprunghafte, Anstiege der erfassten Kraft ein Indiz dafür sind, dass eine zuvor auf dem Untergrund aufstehende Rolle eines als Last wirkenden Behälters oder ganz allgemein die Last selbst den Untergrund vollständig verlassen hat, wobei sich in diesem Moment erneut auf Grundlage der bekannten Geometrie des Fahrzeugkörpers, des Hakenauslegers und der an dem Fahrzeugkörper angeordneten Führungsrolle die Länge der Last ableiten lässt.

In diesem Zusammenhang kann beispielsweise vorgesehen sein, dass die Position-Bestimmungseinheit einen momentanen Schwenkwinkel des Hakenauslegers bestimmt, wobei in einem solchen Fall mittels trigonometrischer Funktionen die Seitenverhältnisse in den aus dem Hakenausleger, dem Fahrzeugkörper und der Last bzw. deren Schwerpunkt gebildeten Dreiecken ableiten lassen und sich dementsprechend Rückschlüsse auf die Lage des Schwerpunkts bzw. die Länge der Last ziehen lassen.

Alternativ oder zusätzlich kann der dem Hakenausleger zugeordnete Antrieb als längenveränderbarer Zylinder ausgeführt sein und insbesondere kann die Position-Bestimmungseinheit dazu eingerichtet sein, einen momentanen Hub des Zylinders zu bestimmen. Auch aus dieser Größe können über die bekannten geometrischen Verhältnisse des erfindungsgemäßen Abrollkippers und insbesondere über den hinsichtlich seiner Position bekannten Anbindungspunkt des Antriebs an dem schwenkbaren Hakenausleger die relevanten Größen abgeleitet werden, beispielsweise zunächst einmal ein momentaner Schwenkwinkel des Hakenauslegers und hieraus dann erneut die Lage des Schwerpunkts oder die Länge der Last bei den oben bereits diskutierten Lastwechseln oder sprunghaften Anstiegen der erfassten Kraft.

In diesem Zusammenhang sei ferner darauf hingewiesen, dass der Antrieb insbesondere durch einen hydraulischen längenveränderbaren Zylinder ausgeführt sein kann, wobei theoretisch jedoch auch Ausführungen mit elektromechanischen Linearantrieben oder ähnlichem in Verbindung mit der vorliegenden Erfindung denkbaren wären, da diese nicht auf die konkrete Ausgestaltung eines Antriebstyps festgelegt ist.

Weiterhin kann in dem erfindungsgemäßen Abrollkipper der Hakenausleger ferner durch einen zweiten Antrieb bezüglich seiner Schwenkachse längenveränderbar sein, vorzugsweise kann die Steuereinheit dazu eingerichtet sein, den Betrieb des zweiten Antriebs auf Grundlage des bestimmten Schwerpunkts und/oder der Länge der aufzunehmenden Last zu steuern oder anzupassen. Auf diese Weise kann bei ermitteltem Schwerpunkt oder Länge der Last diese in eine vorgesehene optimale Position mittels des zweiten Antriebs gezogen werden, wodurch beispielsweise die Verteilung der Achslasten des Fahrzeugs beeinflusst und optimiert werden kann und ggf. sogar auf einen Verriegelungsdorn verzichtet werden könnte. Somit trägt die erfindungsgemäße Bestimmung des Schwerpunkts und/oder der Länge der Last zu einem insgesamt sicheren Betrieb des erfindungsgemäßen Abrollkippers bei. Des Weiteren wird eine Erhöhung des Bedienkomforts für den Fahrer des Fahrzeugs erzielt und mögliche Bedienfehler werden von vornherein prinzipiell ausgeschlossen. In alternativen Ausführungsformen von erfindungsgemäßen Abrollkippern kann der Hakenausleger auch zweiteilig ausgeführt sein, wobei der den Haken tragende Teil gegenüber dem anderen Teil durch einen zweiten Antrieb um eine Achse verschwenkbar ist, welche in Breitenrichtung des Fahrzeugs verläuft. Entsprechend kann auch bei einer derartigen Verschwenkung eines Teils des Hakenauslegers eine lineare Verlagerung der Last gegenüber dem Fahrzeugkörper in ähnlicher Weise wie durch einen Linearantrieb erzielt werden, um die Last in eine optimale Position zu ziehen.

Weiterhin kann der erfindungsgemäße Abrollkipper zusätzlich einen Gewichtssensor zum Bestimmen eines Gewichts einer aufgenommenen Last umfassen, um weitere Parameter davon ermitteln zu können, welche ebenfalls von einer Steuereinheit weiterverarbeitet werden können, um beispielsweise Parameter des Betriebs des Fahrzeugs oder eine relative Position der Last auf dem Fahrzeug mittels des zweiten Antriebs anpassen zu können.

Wie bereits weiter oben angedeutet, betrifft die vorliegende Erfindung gemäß einem zweiten Aspekt ein Verfahren zum Ermitteln des Schwerpunkts und/oder der Länge einer von einem Abrollkipper der eben beschriebenen Art aufzunehmenden Last, umfassend die Schritte eines Bestimmens der an dem Hakenausleger bzw. dem Antrieb anliegenden Kraft während eines Aufsetzvorgangs, eines Bestimmens der momentanen Position des Hakenauslegers oder der momentanen Betriebsposition des Antriebs während des Aufsetzvorgangs und eines Bestimmens des Schwerpunkts und/oder der Länge der Last auf Grundlage der bestimmten Kraft und der bestimmten Position bzw. Betriebsposition.

Hierbei kann erneut zum Bestimmen des Schwerpunkts und/oder der Länge der Last auf einen erfassten Lastwechsel an dem Hakenausleger oder dem Antrieb und/oder einen momentanen starken, insbesondere sprunghaften Anstieg der erfassten Kraft zurückgegriffen werden.

Weiterhin bietet das erfindungsgemäße Verfahren die Möglichkeit eines Steuerns oder Anpassens des zweiten Antriebs zum Verändern der Lage des Hakenauslegers bezüglich seiner Schwenkachse auf Grundlage des Schwerpunkts und/oder der Länge der aufzunehmenden Last und/oder eines Anpassens wenigstens eines Betriebsparameters des Abrollkippers auf Grundlage des erfassten Schwerpunkts und/oder der erfassten Länge der Last und ggf. zusätzlich einem erfassten Gewicht der Last.

Weitere Merkmale und Vorteile der vorliegenden Erfindung werden aus der nachfolgenden Beschreibung einer Ausführungsform davon noch deutlicher, wenn diese zusammen mit den beiliegenden Figuren betrachtet wird. Diese zeigen im Einzelnen:
- Figuren 1 und 2: einen erfindungsgemäßen Abrollkipper bei einem Aufnehmen einer Last mit einer ersten Länge;
- Figuren 3 und 4: den Abrollkipper aus den Figuren 1 und 2 beim Aufnehmen einer Last mit einer zweiten, kürzeren Länge; und
- Figur 5: ein schematisches Schaubild von einigen in dem Fahrzeug aus den Figuren 1 bis 4 eingesetzten Komponenten.

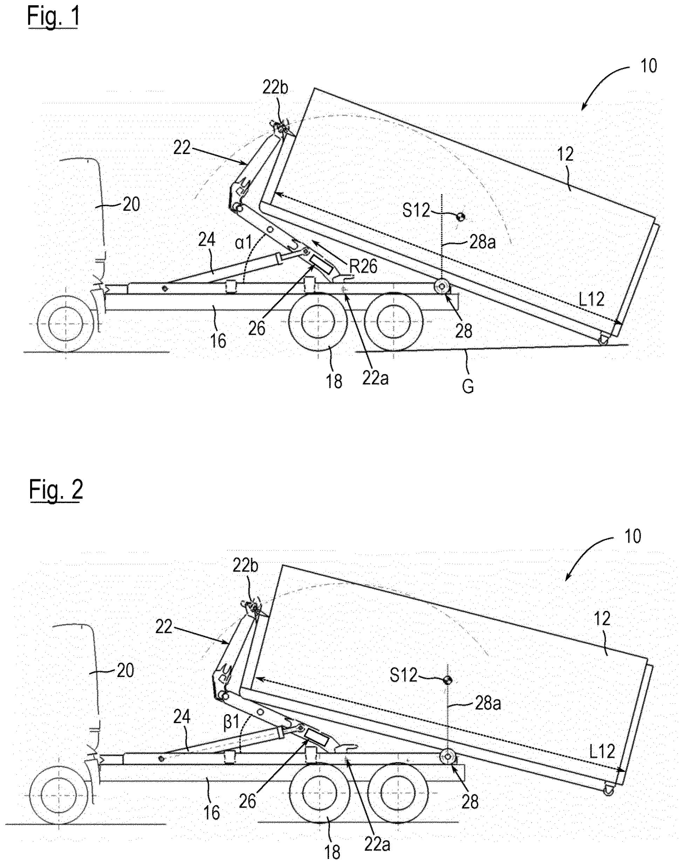

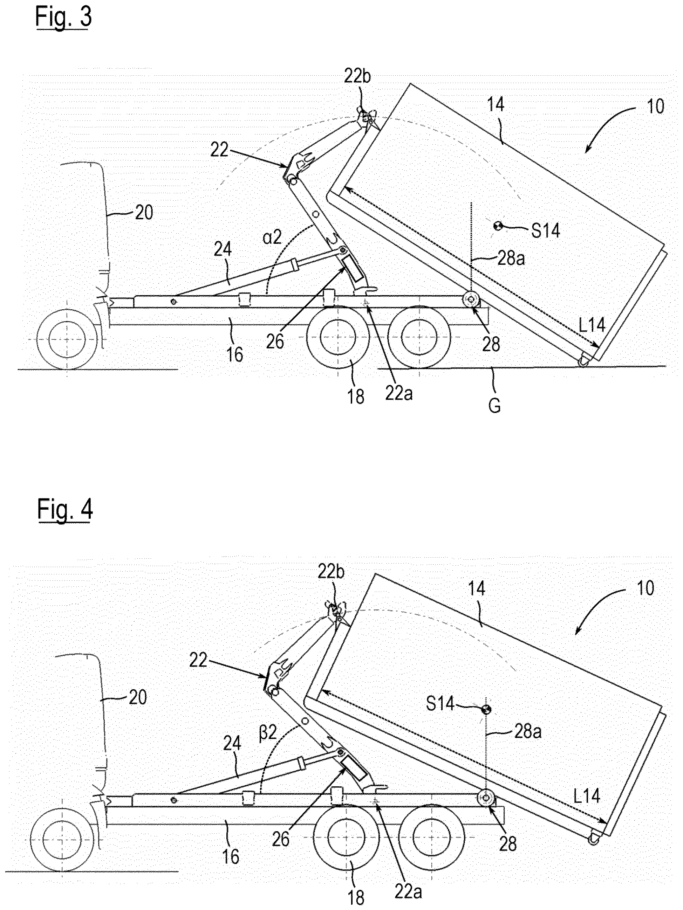

In den Figuren 1 bis 4 ist jeweils in einer schematischen Seitenansicht ein erfindungsgemäßer Abrollkipper dargestellt, welcher ganz allgemein mit dem Bezugszeichen 10 bezeichnet ist. Hierbei nimmt der Abrollkipper 10 in den Figuren 1 und 2 momentan eine erste Last 12 und in den Figuren 3 und 4 eine zweite Last 14 auf, wobei die Länge L12 der ersten Last 12 größer ist als die Länge L14 der zweiten Last 14. In den Figuren 1 bis 4 sind jeweils ebenfalls die Schwerpunkte S12 und S14 der beiden Lasten 12 und 14 unter der Annahme eingezeichnet, dass die Gewichtsverteilung der beiden jeweils als Container ausgeführten Lasten 12 und 14 homogen ist.

Der Abrollkipper 10 selbst umfasst einen Fahrzeugkörper 16 mit einer Mehrzahl von Rädern 18, mit welchen er auf einem Untergrund G aufsteht, von welchem aus auch die beiden Lasten 12 und 14 her übernommen werden können. Hierbei sind weitere Komponenten des Abrollkippers 10 lediglich schematisch angedeutet, wie beispielsweise eine Fahrerkabine 20 im vorderen Teil des Abrollkippers 10, in welcher sich bei einer Fahrt des Abrollkippers 10 ein Fahrer aufhalten wird.

Im einem weiter hinteren Bereich des Fahrzeugkörpers 16 umfasst der Abrollkipper 10 zur Handhabung von Lasten einen schwenkbaren Hakenausleger 22, welcher einerseits über eine Schwenkachse 22a an dem Fahrzeugkörper 16 angelenkt ist und andererseits an seinem entgegengesetzten Ende einen Haken 22b umfasst, mit welchem er an einem entsprechenden Gegenelement der Lasten 12 und 14 einhaken kann. Hierbei ist in den Figuren 1 bis 4 jeweils durch eine gestrichelte kreisförmige Linie eine Bahnkurve des Hakens 22b des Hakenauslegers 22 während einer Schwenkbewegung des Hakenauslegers 22 angedeutet.

Diese Schwenkbewegung des Hakenauslegers um die Schwenkachse 22a herum wird durch einen dem Hakenausleger 22 zugeordneten Antrieb 24 ausgelöst, welcher sowohl an dem Hakenausleger 22 als auch dem Fahrzeugkörper 16 angelenkt und durch einen hydraulisch betriebenen Zylinder gebildet ist. Weiterhin ist innerhalb des Hakenauslegers 22 ein lediglich schematisch angedeuteter zweiter Antrieb 26 vorgesehen, mittels welchem der Hakenausleger 22 bzgl. seiner Schwenkachse 22a längenveränderbar ist. Durch eine entsprechende Ansteuerung des zweiten Antriebs 26 zu einer Verlängerung oder einer Verkürzung des Hakenauslegers 22 entlang der Richtung R26 kann in einer vollständig aufgenommenen Konfiguration der Last 12 bzw. 14 deren Relativposition auf dem Fahrzeugkörper 16 eingestellt oder angepasst werden.

Weiterhin ist am Heck des Abrollkippers 10 an der Oberseite des Fahrzeugkörpers 16 wenigstens eine freilaufende Führungsrolle 28 montiert, beispielsweise ein in Breitenrichtung des Abrollkippers 10 beabstandetes Paar entsprechender Führungsrollen 28. Hierbei kann insbesondere bei Betrachtung der Figuren 1 und 2 nachvollzogen werden, wie während eines Aufnahmevorgangs der dargestellten Last 12 durch eine Schwenkbewegung des Hakenauslegers 22 ein Abrollen der Last 12 über die wenigstens eine Führungsrolle 28 in Richtung der Fahrerkabine 20 und damit zu einer Transportkonfiguration der Last 12 erzielt werden kann.

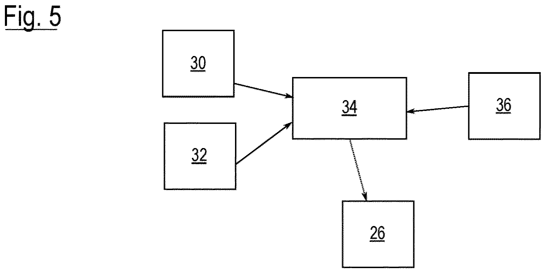

Erfindungsgemäß umfasst der Abrollkipper 10 nun ferner eine geeignete Sensorik sowie eine Steuereinheit, welche in der schematischen Ansicht aus Fig. 5 dargestellt sind. Die entsprechenden Komponenten umfassen eine dem Hakenausleger 22 oder dem ersten Antrieb 24 zugeordnete Kraft-Messeinrichtung 30, die dazu eingerichtet ist, während des in den Figuren 1 und 2 bzw. 3 und 4 gezeigten Aufsetzvorgangs eine an dem Hakenausleger 22 bzw. dem Antrieb 24 anliegende Kraft zu bestimmen, sowie eine dem Hakenausleger oder dem Antrieb zugeordnete Position-Bestimmungseinheit 32, die dazu eingerichtet ist, eine momentane Position des Hakenauslegers 22 oder eine momentane Betriebsposition des ersten Antriebs 24 zu bestimmen, beispielsweise einen momentanen Schwenkwinkel des Hakenauslegers 22 gegenüber dem Fahrzeugkörper 16 oder einen momentanen Hub des als Hydraulikzylinder ausgebildeten ersten Antriebs 24.

Ferner umfasst der Abrollkipper eine mit sowohl der Kraft-Messeinrichtung 30 als auch der Position-Bestimmungseinheit 32 betriebsmäßig gekoppelte Steuereinheit 34, welche beispielsweise mit einer zentralen Steuereinrichtung des Abrollkippers 10 betriebsmäßig verbunden oder mit ihr integriert sein kann. Die Steuereinheit 34 ist hierbei dazu eingerichtet, anhand der von der Kraft-Messeinrichtung 30 und der Position-Bestimmungseinheit 32 gelieferten Daten den Schwerpunkt und/oder die Länge der von dem Abrollkipper 10 aufzunehmenden Last 12 bzw. 14 zu bestimmen und beispielsweise auf dieser Grundlage Steuersignale für einen Betrieb des zweiten Antriebs 26 auszugeben.

Hierbei zeigt ein Vergleich der Figuren 1 und 3, dass bei den unterschiedlich lang ausgebildeten Lasten 12 und 14 jeweils bei einem unterschiedlichen Schwenkwinkel des Hakenauslegeres 22 die entsprechende Last 12 bzw. 14 mit ihrer jeweiligen Lastrolle 12a bzw. 14a den Boden verlässt, wobei die entsprechenden Winkel als α1 in Fig. 1 und α2 in Fig. 3 bezeichnet sind.

In ähnlicher Weise ist bei einem Vergleich der Figuren 2 und 4 zu erkennen, dass in diesen jeweils die Schwerpunkte S12 bzw. S14 der Lasten 12 und 14 gerade durch eine vertikal durch die wenigstens eine Führungsrolle 28 verlaufende Ebene 28a hindurchtreten, wobei diesen beiden Zuständen entsprechende Winkel β1 bzw. β2 des Hakenauslegers 22 entsprechen.

Die Bestimmung der Schwerpunkte S12 und S14 bzw. der Längen L12 und L14 beruhen nun darauf, dass in den Zuständen der Figuren 1 und 3, in welchen jeweils die Lasten 12 und 14 ihren Kontakt zum Untergrund G verlieren, ein momentaner starker, insbesondere sprunghafter, Anstieg der von der Kraft-Messeinrichtung 32 erfassten Kraft zu beobachten ist, während in den Positionen der Lasten 12 und 14 aus den Figuren 2 und 4 jeweils ein Lastwechsel durch die Kraft-Messeinrichtung 32 von einer Zugbelastung auf eine Druckbelastung detektiert wird.

Indem nun die von der Kraft-Messeinrichtung 30 detektierten Kennlinien in Abhängigkeit der von der Position-Bestimmungseinheit 32 erfassten momentanen Positionen des Hakenauslegers 22 bzw. den entsprechenden Winkeln α1, α2, β1 und β2 in Verbindung gesetzt werden, lässt sich in eindeutiger Weise die entsprechende Länge L12 bzw. L14 sowie der jeweilige Schwerpunkt S12 bzw. S14 ableiten.

Auf Grundlage dieser Daten zur Länge L12 bzw. L14 der Lasten 12 und 14 bzw. ihrer Schwerpunkte S12 und S14 lassen sich ferner weitere Vorgänge in dem Abrollkipper 10 auslösen, beispielsweise eine optimale Positionierung der Lasten 12 und 14 mittels des zweiten Antriebs 26 in einer nicht gezeigten voll aufgenommenen Transportposition der Lasten 12 und 14, um die Achslasten auf die Räder 18 in optimaler Weise einstellen zu können. Ferner sei darauf hingewiesen, dass der Abrollkipper 10 zusätzlich einen Gewichtssensor 36 umfassen kann, welcher in ähnlicher Weise mit der Steuereinheit 34 gekoppelt ist und Daten bezüglich des Gewichts der Lasten 12 und 14 liefern kann, beispielsweise sobald diese vollständig auf dem Abrollkipper 10 in ihrer Transportposition positioniert sind.

## Patentansprüche

1. Abrollkipper (10), umfassend:
- einen Fahrzeugkörper (16);
- einen schwenkbaren Hakenausleger (22), welcher dazu eingerichtet ist, eine Last (12, 14) auf den Abrollkipper (10) aufzuziehen und sie von dem Abrollkipper (10) abzusetzen;
- einen dem Hakenausleger (22) zugeordneten Antrieb (24), welcher dazu eingerichtet ist, die Schwenkbewegung des Hakenauslegers (22) anzutreiben;
- wenigstens eine am Heck des Fahrzeugkörpers (16) angeordnete Führungsrolle (28), welche dazu eingerichtet ist, die auf den Abrollkipper (10) aufzuziehende oder davon abzusetzende Last (12, 14) während eines entsprechenden Aufsetz- oder Absetzvorgangs zu führen;
- eine dem Hakenausleger (22) oder dem Antrieb (24) zugeordnete Kraft-Messeinrichtung (30), welche dazu eingerichtet ist, wenigstens während Aufsetzvorgängen eine an dem Hakenauslieger (22) bzw. dem Antrieb (24) anliegende Kraft zu bestimmen;
- eine dem Hakenausleger (22) oder dem Antrieb (24) zugeordnete Position-Bestimmungseinheit (32), welche dazu eingerichtet ist, eine momentane Position des Hakenauslegers (22) oder eine momentane Betriebsposition des Antriebs (24) zu bestimmen; und
- eine Steuereinheit (34), welche mit der Kraft-Messeinrichtung (30) und der Position-Bestimmungseinheit (32) betriebsmäßig gekoppelt und dazu eingerichtet ist, anhand der von der Kraft-Messeinrichtung (30) und der Position-Bestimmungseinheit (32) gelieferten Daten den Schwerpunkt (S12, S14) und/oder die Länge (L12, L14) einer von dem Abrollkipper (10) aufzunehmenden Last (12, 14) zu bestimmen.

2. Abrollkipper (10) nach Anspruch 1,
wobei die Steuereinheit (34) dazu eingerichtet ist, den Schwerpunkt (S12, S14) und/oder die Länge (L12, L14) der Last (12, 14) anhand eines erfassten Lastwechsels an dem Hakenauslager (22) oder dem Antrieb (24) und/oder einem momentanen starken, insbesondere sprunghaften, Anstieg der erfassten Kraft zu ermitteln.

3. Abrollkipper (10) nach einem der vorhergehenden Ansprüche,
wobei die Position-Bestimmungseinheit (32) dazu eingerichtet ist, einen momentanen Schwenkwinkel (α1, α2, β1, β2) des Hakenauslegers (22) zu bestimmen.

4. Abrollkipper (10) nach einem der vorhergehenden Ansprüche,
wobei der Antrieb (24) als längenveränderbarer Zylinder ausgeführt ist und vorzugsweise die Position-Bestimmungseinheit (32) dazu eingerichtet ist, einen momentanen Hub des Zylinders zu bestimmen.

5. Abrollkipper (10) nach Anspruch 4,
wobei der Antrieb (24) durch einen hydraulischen längenveränderbaren Zylinder ausgeführt ist.

6. Abrollkipper (10) nach einem der vorhergehenden Ansprüche,
wobei der Hakenauslager (22) ferner durch einen zweiten Antrieb (26) bezüglich seiner Schwenkachse (22a) längenveränderbar ist und vorzugsweise die Steuereinheit (34) dazu eingerichtet ist, den Betrieb des zweiten Antriebs (26) auf Grundlage des Schwerpunkts (S12, S14) und/oder der Länge (L12, L14) der aufzunehmenden Last (12, 14) zu steuern oder anzupassen.

7. Abrollkipper (10) nach einem der vorhergehenden Ansprüche,
ferner umfassend einen Gewichtssensor (16) zum Bestimmen eines Gewichts einer aufgenommenen Last (12, 14).

8. Verfahren zum Ermitteln des Schwerpunkts (S12, S14) und/oder der Länge (L12, L14) einer von einem Abrollkipper (10) nach einem der vorhergehenden Ansprüche aufzunehmenden Last (12, 14),
umfassend die Schritte:
- Bestimmen der an dem Hakenauslieger (22) bzw. dem Antrieb (24) anliegenden Kraft während eines Aufsetzvorgangs;
- Bestimmen der momentanen Position des Hakenauslegers (22) oder der momentanen Betriebsposition des Antriebs (24) während des Aufsetzvorgangs; und
- Bestimmen des Schwerpunkts (S12, S14) und/oder der Länge (L12, L14) der Last auf Grundlage der bestimmten Kraft und der bestimmten Position bzw. Betriebsposition.

9. Verfahren nach Anspruch 8,
wobei das Bestimmen des Schwerpunks (S12, S14) und/oder der Länge (L12, L14) der Last (12, 14) anhand eines erfassten Lastwechsels an dem Hakenauslager (22) oder dem Antrieb (24) und/oder einem momentanen starken, insbesondere sprunghaften, Anstieg der erfassten Kraft ermittelt wird.

10. Verfahren nach einem der Ansprüche 8 und 9,
ferner umfassend ein Steuern oder Anpassen des zweiten Antriebs (26) zum Verändern der Länge des Hakenauslegers (22) bezüglich seiner Schwenkachse (22a) auf Grundlage des Schwerpunkts (S12, S14) und/oder der Länge (L12, L14) der aufzunehmenden Last (12, 14).

11. Verfahren nach einem der Ansprüche 8 bis 10,
ferner umfassend ein Anpassen wenigstens eines Betriebsparameters des Abrollkippers (10) auf Grundlage des erfassten Schwerpunkts (S12, S14) und/oder der erfassten Länge (L12, L14) der Last (12, 14) und ggf. einem erfassten Gewicht der Last (12, 14).
